# EUROPEAN PATENT SPECIFICATION

(11) **EP 4 536 544 B1**
(45) Date of publication and mention of the grant of the patent: **08.04.2026**
(21) Application number: 23734744.8
(22) Date of filing: 06.06.2023
(51) Int. Cl.: B62J 17/02

(54) **MOTORCYCLE WITH GROUND EFFECT FAIRING**
MOTORRAD MIT BODENEFFEKTVERKLEIDUNG
MOTOCYCLETTE DOTÉE D'UN CARÉNAGE À EFFET DE SOL

(30) Priority: 06.06.2022 IT 202200011861
(43) Date of publication of application: 16.04.2025
(73) Proprietor: Piaggio & C. S.P.A., 56025 Pontedera Pisa (IT)
(72) Inventor: DE LUCA, Marco, 56025 Pontedera (PI) (IT)
(74) Representative: Mannucci, Michele
(86) International application number: PCT/IB2023/055816
(87) International publication number: WO 2023/238025

(56) References cited:
- EP-A1- 3 141 465
- EP-A1- 3 546 328
- JP-A- H08 225 092
- JP-A- H11 342 883

## Description

### TECHNOLOGICAL FIELD

The present invention relates to the field of motorcycles. Preferably, the present invention relates to so-called "road" motorcycles. Even more preferably, the present invention relates to racing motorcycles, in particular for high-level competitions such as MotoGP^{(™)}.

### BACKGROUND ART

The concept of ground effect is known in the prior art. This effect is mainly associated with the underbody of the vehicle, i.e. the underside of the vehicle facing the ground.

In racing cars, such as Formula 1, the underbody of the vehicle is shaped so as to create a ground effect, i.e. downforce actions deriving from the layer of air flowing under the underbody of the car. These downforce actions improve the car grip when traveling at high speeds.

The application of the aforementioned ground effect on the bottom of vehicles other than automobiles is also known. For example, document DE202019103417U1 discloses this effect also associated with the bottom of a motorcycle.

The use of fairings with an improved aerodynamic effect, such as the one described in the document, is also known.

From JPH8225092 the use of lateral flaps is known which, together with the fairing, create an air current which, due to Venturi effect, attracts the motorcycle towards the ground, increasing wheel grip. Nonetheless, this solution has the drawback that the flaps can rub against the ground, creating friction and slowing down the motorcycle. Furthermore, the flaps significantly increase the risk of an accident, as the motorcycle can lever on the flaps and thus suddenly lose grip. Other embodiments having lower portions of the fairing that are in part flat are disclosed in EP3546328, JPH11342883 and EP3141465. None of them is able to provide a ground effect when the motorcycle is inclined, because of the limited extension of straight portions of their fairing. EP3546328 A1 discloses a motorcycle according to the preamble of claim 1.

In the light of what is known, the need is felt in the latest generation of sports motorcycles to increase and improve the grip of the motorcycle when cornering at high speed, i.e. when the motorcycle is strongly inclined to the side and the tires tend to lose grip due to the centrifugal force acting on the motorcycle.

### SUMMARY

The object of the present invention is to provide a motorcycle comprising a front steered wheel, a rear driving wheel, a saddle adapted to receive a rider, a handlebar configured to steer the front wheel, a fairing adapted to cover at least part of an engine. Said fairing comprises a bottom portion to which two side portions are connected, in turn comprising an upper side portion and a lower side portion. Said lower side portions are shaped so that, observing the motorcycle from the front, they form a V-shaped profile with the bottom portion. Each of said lower side portions comprises an outer surface shaped so that first section profiles according to transversal planes orthogonal to a midplane of the motorcycle are linear, i.e. straight. In practice, the outer surface of the lower side portion is a ruled surface, i.e. a surface made up of segments of straight lines, which form a V-shaped profile when viewed from the front of the motorcycle. This outer surface is a single curvature surface. This type of outer surface creates a ground effect when the motorcycle is inclined. Basically, when a lower side portion is parallel or substantially parallel to the ground, the air flowing therebetween creates a vacuum which, due to Venturi effect, attracts the surface towards the ground, thus increasing the grip of the motorcycle. A motorcycle according to the invention is defined by claim 1.

The outer surface may be further shaped so that second section profiles according to longitudinal planes, incident to said midplane of the motorcycle and perpendicular to the outer surface, are convex. This longitudinal conformation of the outer surface allows increasing and regulating the ground effect of the motorcycle in leaning conditions, i.e. lateral inclination (or roll). The depression due to Venturi effect of the air flowing between the outer surface and the ground is maximum at the outermost point of the convex profile and then degrades at its sides.

In particular, said second convex profiles may be airfoils. In this way, an overpressure is created which, when the outer surface is close to the ground, transforms into an optimized Venturi effect and therefore into an improved ground effect.

Preferably, said first linear, i.e. straight (rectilinear), profiles may be inclined with respect to the midplane of the motorcycle by an angle of between 25 and 35 degrees, preferably equal to 30 degrees. This angle of inclination of the outer surface with respect to the midplane is substantially complementary to the maximum roll angle of the motorcycle with respect to the ground.

In particular, said fairing may comprise a windshield portion adapted to frontally cover the handlebar. This windshield portion allows the air to be deflected beyond the handlebar and the rider, when the latter is crouched on the motorcycle itself, i.e. at high speed on a straight line.

The maximum width of said lower side portions may be equal to or less than the maximum width of the windshield portion. In practice, the V-shaped profile created by the lower side portions extends laterally so as to fit within the maximum lateral dimensions of the windshield. If the V-shaped profile extends further, the aerodynamics of the motorcycle would be affected. Conversely, if the V-shaped profile of the lower side portions were too short, the ground effect of the outer surface would be minimal and the downforce action of the same weak.

Preferably, said first linear profiles may be parallel to each other. This means that the grooves of the aforementioned ruled surface are parallel to each other, as occurs in a cylinder.

In particular, when the motorcycle is in a condition of maximum lateral inclination, said first linear profiles, of the side towards which the motorcycle is inclined, are substantially parallel to the ground. This inclination of the linear profiles of the outer surface is optimized according to the maximum roll inclination that the motorcycle can reach.

According to the invention, said lower side portions are connected to upper side portions by means of respective connecting portions so that the lower side portions are wider than the upper side portions. Still according to the invention, observing the motorcycle from the front, the fairing of the motorcycle widens progressively from the bottom upwards until the V profile ends and, after a step at the connecting portions, the profile of the fairing narrows at the upper side portions. This conformation optimizes the aerodynamics of the motorcycle at high speeds and at the same time allows the aforementioned ground effect to be created when the motorcycle is rolled to take a curve.

In particular, said lower side portion may be devoid of openings, so as not to create turbulence which would alter the ground effect when the motorcycle is leaning.

Furthermore, the motorcycle has no elements capable of touching or rubbing with the ground, apart from the tires of the front and rear wheels, in the condition of maximum lateral inclination of the motorcycle and when it is in motion. Any element sliding on the ground would cause a brake on the advancement of the motorcycle or a potential element capable of triggering a loss of grip of the tires of the wheels.

The outer surface of the lower side portions of the fairing is a single curvature surface, in that it is linear, i.e., straight, and not curved, along an up-down direction, and convex along a front-back direction. As will become clear from what is described and illustrated below in the drawing, such outer surface is a ruled surface, formed by straight lines (segments of straight lines) extending in an up-down direction and with a curved directrix which is convex towards the outside of the motorcycle, which curved directrix extends in the front-to-back direction.

These and other advantages will become apparent in more detail from the description, given hereinafter, of an embodiment given by way of non-limiting example with reference to the accompanying drawings.

### DESCRIPTION OF THE DRAWINGS

In the drawings:
Fig. 1 illustrates a front view of a motorcycle in an upright position according to the present invention;
Fig. 2 illustrates a front view of a motorcycle in the maximum inclination position according to the present invention;
Fig. 3 illustrates a side view of a motorcycle according to the present invention;
Fig. 4 illustrates a schematic view of an outer surface of a lower side portion of the fairing of a motorcycle according to the present invention.

### DETAILED DESCRIPTION

The following description of one or more embodiments of the invention relates to the accompanying drawings. The same numerical references in the drawings identify identical or similar elements. The subject of the invention is defined by the appended claims. The technical details, structures or features of the solutions described below may be combined with each other in any way.

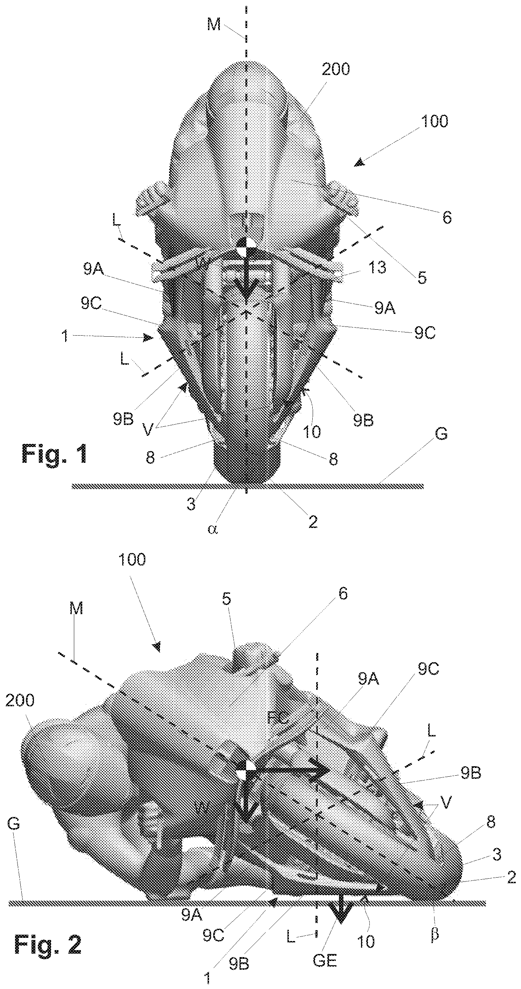

In Fig. 1, 2 and 3, a motorcycle is shown with reference numeral 100.

In Fig. 1, the motorcycle 100 is in an upright position, i.e. with its midplane M vertical to the ground G. The midplane M is the plane that passes through the centre of the vehicle, in particular it coincides with the midplanes of the front and rear wheels 2, 3, when the front wheel 2 is not steered.

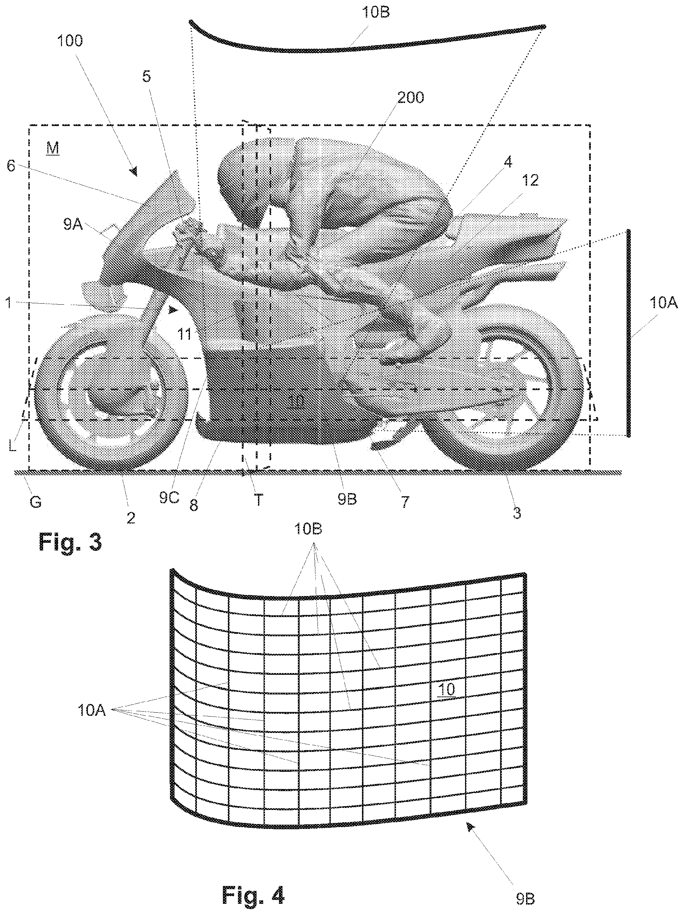

The motorcycle 100, like the vast majority of motorcycles, comprises a front steered wheel 2, a rear driving wheel 3, a saddle 4, an engine 7 and a handlebar 5 for controlling the front steered wheel 2, better shown in Fig. 3.

As shown in Figs. 1, 2 and 3, the motorcycle 100 also comprises a fairing 1 shaped to at least partially cover the engine 7.

By fairing 1 it is meant the front fairing of the motorcycle 100, since the motorcycle 100 may also comprise a rear cover indicated in Fig. 3 with the reference numeral 12. The rear cover 12 is not considered a fairing according to the present invention.

Fairing 1, i.e. the front fairing, comprises various portions: a bottom portion 8, two side portions 9 and a windshield portion 6.

The bottom portion 8 is the portion of the fairing 1 which faces the ground G, in particular when the motorcycle 100 is in an upright position.

The right and left side portions 9 are connected at the bottom, in a continuous manner, to the bottom portion 8.

The right and left side portions 9 are connected at the top, in a continuous manner, to the windshield portion 6.

Each side portion 9 is in turn divided into an upper side portion 9A and a lower side portion 9B, as shown in Figs. 1, 2 and 3.

Each upper side portion 9A is connected, in a continuous manner, to the lower side portion 9B by means of a connecting portion 9C, as illustrated in Figs. 1, 2 and 3.

The lower side portions 9B each include an outer surface 10, which faces towards the outside of the motorcycle 100.

The outer surface 10 is a single curvature surface of the convex type. This means that the outer surface 10 is curved only in one direction, while in the perpendicular direction it is straight, as schematically illustrated in Fig. 4.

By sectioning the outer surface 10 of each lower side portion 9B with planes T transverse to the motorcycle 100 and perpendicular to the midplane M, linear, i.e. straight, outer profiles are obtained. This outer profile is called the first profile and is indicated with the reference numeral 10A in Figs. 3 and 4.

By sectioning the outer surface 10 with longitudinal planes L which are incident to the midplane M and perpendicular to the outer surface 10 itself, convex outer profiles are obtained. This outer profile is called the second profile and is indicated with the reference numeral 10B in Figs. 3 and 4.

The first profile 10A is therefore straight, while the second profile 10B is convex, as shown in Figs. 3 and 4. Fig. 4 clearly shows that the outer surface of each lower side portion of the fairing is formed in practice by parallel straight line segments 10A, each extending in an up-down direction, and overall defining a single-curvature ruled surface. The directrix of this single-curvature ruled surface is defined by the second profile 10B, which is a curved line extending in the front-rear direction, and has a convexity directed towards the outside of the fairing.

In particular, the convexity of the second profile 10B is such that the second profile is an airfoil. The convexity of the second profile 10B has therefore an advanced convexity with respect to the centre of the profile itself, as illustrated in Figs. 3 and 4. Basically, the point of maximum convexity of the extrados of the airfoil 10B is arranged in a forward position with respect to the centre, in the longitudinal direction, of the profile itself.

The outer surface 10 of each lower side portion 9B is inclined with respect to the midplane M. Since all second profiles 9B are parallel to each other, as illustrated in Fig. 4, these are all inclined equally with respect to the midplane.

The lower side portions 9B are inclined with respect to the midplane so as to form a V-shaped profile clearly visible in Figs. 1 and 2 and marked with the reference "V''.

The V-shaped profile is symmetrical with respect to the midplane M, therefore both outer surfaces 10 are inclined by an angle α with respect to the midplane M itself.

The angle α of inclination of the first linear profiles 10A of the lower side portions 9B with respect to the midplane M is between 25 and 35 degrees, preferably about 30 degrees. Each motorcycle 100 may have a maximum lateral inclination limit, or roll, which depends on various factors, and in particular depends on the speed of the motorcycle 100, on the friction coefficient of the wheels 2, 3, on the mass of the motorcycle 100 and on the radius of curvature of the curve. Generally, a racing motorcycle 100, driven by an experienced rider 200, can get to lean angles of 60-65 degrees without losing contact with the ground G.

In these conditions of maximum lean, i.e., maximum lateral inclination, the risk of losing grip with the wheels 2, 3 is very high. Under these conditions, the motorcycle 100 is pushed downwards by the gravitational force W and is pushed sideways by the centrifugal force FC. The balance of these two forces determines the lean of the motorcycle 100.

Obviously, the greater the force that attracts the motorcycle 100 towards the ground G, the greater the centrifugal force that the motorcycle can withstand without losing grip. This allows taking corners at higher speeds.

Conversely, at the same cornering speed, increasing the downward thrust of the motorcycle 100 improves the grip of the tires of wheels 2, 3 and therefore the safety for the rider 200.

The outer surface 10 is shaped and arranged in such a way that, when the motorcycle 100 is in conditions of maximum lateral inclination, without touching the ground, for example when the angle β is between 25 and 35 degrees, the outer surface 10 is substantially parallel to the ground, as shown in Fig. 2. Under these conditions, in addition to the gravitational force which attracts the motorcycle 100 towards the ground G, a depression is created at the outer surface 10 which creates a force GE which attracts the motorcycle 100 downwards, creating the so-called ground effect. The force GE is therefore added to the force of gravity G, making it possible to increase the speed along the curve and therefore the centrifugal force FC.

The vertical thrust GE decreases as the distance of the outer surface 10 from the ground G increases. Therefore, the force GE is created only when the motorcycle 100 is leaning and increases as the outer surface 10 approaches the ground G, decreasing instead when it leaves the ground G.

Since the lower side portions 9B diverge in a V shape, as clarified above, the fairing 1 tends to widen as a function of the height G of the lower side portions 9B from the ground. The lower the lower side portions 9B are, the narrower the fairing 1 remains, but the ground effect decreases. Conversely, the higher the lower side portions 9B are, the more the fairing 1 widens, increasing the ground effect. However, the fairing 1 cannot widen at will, because by increasing the height of the V-shaped profile the aerodynamics of the motorcycle 100 decrease, which by widening therefore becomes less aerodynamic.

The height of the lower side portions 9B is therefore the result of a balance aimed at maximizing the ground effect while minimizing the loss of aerodynamics.

Optimal ground effect and aerodynamic values were found with an angle α of about 30 degrees and with a maximum width of the lower side portions 9B less than or equal to the maximum width of the windshield portion 6.

The lower side portions 9B are connected to the upper side portions 9A by means of connecting portions 9C. At this connecting portion 9C, the fairing 1 therefore comprises a step, as better illustrated in Figs. 1 and 2. The connecting portions 9C develop longitudinally.

The width of the fairing 1 at said upper lateral portions 9A is less than the maximum width of the same at said lower side portions 9B.

In order to avoid turbulence, which would invalidate the ground effect of the outer surface 10, this does not include openings. Conversely, the openings 11, to allow the hot air coming from the radiator 13 and from the engine 7 to exit, are arranged on the upper side portions 9A, as shown in Fig. 3.

In conclusion, it is clear that the invention thus conceived is susceptible to numerous modifications or variations, all covered by the invention which is defined by the appended claims.

## Claims

1. Motorcycle (100) comprising a front steered wheel (2), a rear driving wheel (3), a saddle (4) adapted to receive a rider (200), a handlebar (5) configured to steer said front wheel (2), a fairing (1) adapted to cover at least part of an engine (7);
said fairing (1) comprising a bottom portion (8) to which two side portions (9) are connected, in turn comprising an upper side portion (9A) and a lower side portion (9B); each of said lower side portions (9B) comprising an outer surface (10) shaped so that first section profiles (10A) according to transversal planes (T) orthogonal to a midplane (M) of the motorcycle (100) are straight;
said lower side portions (9B) being shaped so that, observing the motorcycle (100) from the front, they form a V-shaped profile with the bottom portion (8); and
wherein, observing the motorcycle (100) from the front, the fairing (1) of the motorcycle (100) widens progressively from the bottom upwards until the V profile ends and, **characterized in that** after a step at connecting portions (9C) connecting said lower and upper side portions (9A, 9B), the profile of the fairing narrows at the upper side portions (9A).

2. Motorcycle (100) according to claim 1, wherein said outer surface (10) is further shaped so that second section profiles (10B) according to longitudinal planes (L), intersecting said midplane (M) of the motorcycle (100) and perpendicular to the outer surface (10), are convex.

3. Motorcycle (100) according to claim 2, wherein the outer surface (10) is a single curvature surface.

4. Motorcycle (100) according to claim 2, wherein said second profiles (10B) are airfoils.

5. Motorcycle (100) according to claim 4, wherein the convexity of the second profiles (10B) is advanced with respect to the centre of the profile itself.

6. Motorcycle (100) according to any one of the preceding claims, wherein said first profiles (10A) are inclined with respect to the midplane (M) by an angle (α) comprised between 25 and 35 degrees, preferably equal to 30 degrees.

7. Motorcycle (100) according to claim 6, wherein said fairing (1) comprises a windshield portion (6) adapted to frontally cover the handlebar (5).

8. Motorcycle (100) according to claim 7, wherein the maximum width of said lower side portions (9B) is equal to or less than the maximum width of the windshield portion (6).

9. Motorcycle (100) according to any one of the preceding claims, wherein, when the motorcycle (100) is in a condition of maximum lateral inclination, said first profiles (10A), of the side towards which the motorcycle (100) is inclined, are substantially parallel to the ground (G).

10. Motorcycle (100) according to any one of the preceding claims, wherein said lower side portions (9B) are connected to upper side portions (9A) by means of respective connecting portions (9C) so that the lower side portions (9B) are wider than the upper side portions (9A).

11. Motorcycle (100) according to claim 10, wherein the maximum width of the fairing (1) at said lower side portions (9B) is greater than the width of the fairing (1) at said upper side portions (9A).

12. Motorcycle (100) according to claim 10 or 11, wherein the maximum width of the fairing (1) at said lower side portions (9B) is less than or equal to the maximum width of the windshield portion (6).

13. Motorcycle (100) according to any one of the preceding claims, wherein said lower side portion (9B) is devoid of openings (11).

14. Motorcycle (100) according to any one of the preceding claims, which, apart from the front and rear wheels (2,3), does not have elements adapted to touch or rub against the ground (G) in the condition of maximum lateral inclination of the motorcycle (100) when it is in motion.

## Patentansprüche

1. Motorrad (100) umfassend ein vorderes Lenkrad (2), ein hinteres Antriebsrad (3), einen Sattel (4) zur Aufnahme eines Fahrers (200), einen Lenker (5) zur Lenkung des vorderen Rades (2) und eine Verkleidung (1) zum Abdecken zumindest eines Teils eines Motors (7);
wobei die Verkleidung (1) einen unteren Abschnitt (8) umfasst, mit dem zwei Seitenteile (9) verbunden sind, die wiederum einen oberen Seitenteil (9A) und einen unteren Seitenteil (9B) umfassen;
wobei jeder der unteren Seitenteile (9B) eine Außenfläche (10) umfasst, die so geformt ist, dass erste Abschnittsprofile (10A) entlang Querebenen (T), die orthogonal zu einer Mittelebene (M) des Motorrads (100) sind, gerade sind;
wobei die unteren Seitenteile (9B) so geformt sind, dass sie, bei Betrachtung des Motorrads (100) von vorne, mit dem unteren Teil (8) ein V-förmiges Profil bilden; und
wobei sich die Verkleidung (1) des Motorrads (100), bei Betrachtung des Motorrads (100) von vorne, vom unteren Teil nach oben hin zunehmend verbreitert, bis das V-Profil endet, und
**dadurch gekennzeichnet, dass** sich das Profil der Verkleidung nach einer Stufe an Verbindungsteilen (9C), die die unteren und oberen Seitenteile (9A, 9B) verbinden, an den oberen Seitenteilen (9A) verjüngt.

2. Motorrad (100) gemäß Anspruch 1, wobei die Außenfläche (10) des Weiteren so geformt ist, dass zweite Abschnittsprofile (10B) entlang Längsebenen (L), die die Mittelebene (M) des Motorrads (100) schneiden und senkrecht zur Außenfläche (10) stehen, konvex sind.

3. Motorrad (100) gemäß Anspruch 2, wobei die Außenfläche (10) eine Fläche mit einer einzigen Krümmung ist.

4. Motorrad (100) gemäß Anspruch 2, wobei die zweiten Profile (10B) Tragflächen sind.

5. Motorrad (100) gemäß Anspruch 4, wobei die Konvexität der zweiten Profile (10B) in Bezug auf die Mitte des Profils selbst vorverlegt ist.

6. Motorrad (100) gemäß einem der vorangegangenen Ansprüche, wobei die ersten Profile (10A) in Bezug auf die Mittelebene (M) um einen Winkel (α) geneigt sind, der zwischen 25 und 35 Grad, vorzugsweise um 30 Grad, liegt.

7. Motorrad (100) gemäß Anspruch 6, wobei die Verkleidung (1) einen Windschutzabschnitt (6) umfasst, der dazu ausgebildet ist, den Lenker (5) frontal abzudecken.

8. Motorrad (100) gemäß Anspruch 7, wobei die maximale Breite der unteren Seitenabschnitte (9B) gleich oder kleiner als die maximale Breite des Windschutzabschnitts (6) ist.

9. Motorrad (100) gemäß einem der vorangegangenen Ansprüche, wobei, wenn sich das Motorrad (100) in einem Zustand maximaler seitlicher Neigung befindet, die ersten Profile (10A) der Seite, zu der das Motorrad (100) geneigt ist, im Wesentlichen parallel zum Boden (G) sind.

10. Motorrad (100) gemäß einem der vorangegangenen Ansprüche, wobei die unteren Seitenteile (9B) mit den oberen Seitenteilen (9A) mittels entsprechender Verbindungsteile (9C) verbunden sind, sodass die unteren Seitenteile (9B) breiter sind als die oberen Seitenteile (9A).

11. Motorrad (100) gemäß Anspruch 10, wobei die maximale Breite der Verkleidung (1) an den unteren Seitenteilen (9B) größer ist als die Breite der Verkleidung (1) an den oberen Seitenteilen (9A).

12. Motorrad (100) gemäß Anspruch 10 oder 11, wobei die maximale Breite der Verkleidung (1) an den unteren Seitenteilen (9B) kleiner oder gleich der maximalen Breite des Windschutzabschnitts (6) ist.

13. Motorrad (100) gemäß einem der vorangegangenen Ansprüche, wobei das untere Seitenteil (9B) keine Öffnungen (11) aufweist.

14. Motorrad (100) gemäß einem der vorangegangenen Ansprüche, das außer den Vorder- und Hinterrädern (2, 3) keine Elemente aufweist, die dazu ausgebildet sind, den Boden (G) im Zustand der maximalen seitlichen Neigung des Motorrads (100) während der Fahrt zu berühren oder daran zu reiben.

## Revendications

1. Motocyclette (100) comprenant une roue avant directrice (2), une roue arrière motrice (3), une selle (4) apte à recevoir un conducteur (200), un guidon (5) configuré pour diriger ladite roue avant (2), un carénage (1) apte à couvrir au moins une partie d'un moteur (7) ; ledit carénage (1) comprenant une partie basse (8) à laquelle les deux parties latérales (9) sont connectées, comprenant à leur tour une partie latérale supérieure (9A) et une partie latérale inférieure (9B) ; chacune desdites parties latérales inférieures (9B) comprenant une surface externe (10) conformée de façon à ce que des premiers profils de section (10A) selon des plans transversaux (T) perpendiculaires à un plan médian (M) de la motocyclette (100) soient droits ;
lesdites parties latérales inférieures (9B) étant conformées de telle sorte que, en observant la motocyclette (100) depuis l'avant, elles forment un profil un forme de V avec la partie basse (8) ; et
dans laquelle, en observant la motocyclette (100) depuis l'avant, le carénage (1) de la motocyclette (100) s'élargit progressivement du bas vers le haut jusqu'à ce que le profil en V se termine,
**caractérisée en ce que**, après une étape, au niveau de parties de connexion (9C), connectant lesdites parties latérales inférieures et supérieures (9A, 9B), le profil du carénage se réduit au niveau des parties latérales supérieures (9A).

2. Motocyclette (100) selon la revendication 1, dans laquelle ladite surface externe (10) est en outre conformée de telle sorte que des deuxièmes profils de section (10B) selon des plans longitudinaux (L), formant une intersection avec ledit plan médian (M) de la motocyclette (100) et perpendiculaires à la surface externe (10), sont convexes.

3. Motocyclette (100) selon la revendication 2, dans laquelle la surface externe (10) est une surface à courbure unique.

4. Motocyclette (100) selon la revendication 2, dans laquelle lesdits deuxièmes profils (10B) sont des profils aérodynamiques.

5. Motocyclette (100) selon la revendication 4, dans laquelle le convexité des deuxièmes profils (10B) est avancée par rapport au centre du profil lui-même.

6. Motocyclette (100) selon l'une quelconque des revendications précédentes, dans laquelle lesdits premiers profils (10A) sont inclinés par rapport au plan médian (M) d'un angle (α) compris entre 25 et 35 degrés, de préférence égal à 30 degrés.

7. Motocyclette (100) selon la revendication 6, dans laquelle ledit carénage (1) comprend une partie formant parebrise (6) apte à couvrir frontalement le guidon (5).

8. Motocyclette (100) selon la revendication 7, dans laquelle la largeur maximale desdites parties latérales inférieures (9B) est inférieure ou égale à la largeur maximale de la partie formant parebrise (6).

9. Motocyclette (100) selon l'une quelconque des revendications précédentes, dans laquelle, lorsque la motocyclette (100) est à l'état d'inclinaison latérale maximale, lesdits premiers profils (10A), du côté vers lequel la motocyclette (100) est inclinée, sont sensiblement parallèles au sol (G).

10. Motocyclette (100) selon l'une quelconque des revendications précédentes, dans laquelle lesdites parties inférieures (9B) sont connectées à des parties latérales supérieures (9A) au moyen de parties de connexion respectives (9C) de sorte que les parties latérales inférieures (9B) soient plus larges que les parties latérales supérieures (9A).

11. Motocyclette (100) selon la revendication 10, dans laquelle la largeur maximale du carénage (1) au niveau desdites parties latérales (9B) est supérieure à la largeur du carénage (1) au niveau desdites parties latérales supérieures (9A).

12. Motocyclette (100) selon la revendication 10 ou 11, dans laquelle la largeur maximale du carénage (1) au niveau desdites parties latérales inférieures (9B) est inférieure ou égale à la largeur maximale de la partie formant parebrise (6).

13. Motocyclette (100) selon l'une quelconque des revendications précédentes, dans laquelle ladite partie latérale inférieure (9B) et dépourvue d'ouvertures (11).

14. Motocyclette (100) selon l'une quelconque des revendications précédentes, laquelle, à part les roues avant et arrière (2, 3), ne comporte pas d'éléments apte à toucher ou frotter contre le sol (G) en cas d'inclinaison latérale maximale de la motocyclette (100), lorsque celle-ci est en mouvement.
